# EUROPÄISCHE PATENTANMELDUNG

(11) **EP 4 813 185 A1**
(43) Veröffentlichungstag der Anmeldung: **30.09.2026**
(21) Anmeldenummer: 26156339.9
(22) Anmeldetag: 04.02.2026
(51) Int. Cl.: A01B 69/04, A01B 76/00

(54) **LANDWIRTSCHAFTLICHE ARBEITSMASCHINE**

(30) Priorität: 26.03.2025 DE 102025105992
(71) Anmelder: CLAAS Tractor S.A.S., 78141 Vélizy-Villacoublay Cedex (FR)
(72) Erfinder: Niggemeyer, Tobias, 33098 Paderborn (DE); Monkenbusch, Robin, 33378 Rheda-Wiedenbrück (DE); Rusterholtz, Thiebaud, 91470 LIMOURS (FR)
(74) Vertreter: CLAAS Gruppe

(57) **Zusammenfassung**

Die vorliegende Erfindung betrifft eine landwirtschaftliche Arbeitsmaschine (10) mit einem Visualisierungssystem (1), welches zur Visualisierung von durch an der Arbeitsmaschine (10) angeordneten und/oder dieser zugeordneten Sensoren (12) zumindest eines Sensorsystems (11) bereitgestellten Informationen der Arbeitsmaschine (10), der Umgebung und einem von der Arbeitsmaschine (10) auszuführenden Arbeitsprozess eingerichtet und ausgeführt ist, sowie einer Steuerungsvorrichtung (7), die zum Empfang und zur Auswertung von Daten, welche die Sensoren (12) bereitstellen, ausgeführt und eingerichtet ist, um die Arbeitsmaschine (10) und das Visualisierungssystem (1) anzusteuern, wobei das Visualisierungssystem (1) dazu ausgeführt ist, mittels zumindest einer Visualisierungseinheit (4) einen laufenden Prozessschritt des von der in einem teilautonomen Modus (TM) oder vollautonomen Modus (VM) betriebenen Arbeitsmaschine (10) ausgeführten Arbeitsprozesses, einen oder mehrere geplante nachfolgende Prozessschritte und die an der Überwachung der Prozessschritte des Arbeitsprozesses beteiligten Sensoren (12) zu visualisieren

## Beschreibung

Die vorliegende Erfindung betrifft eine landwirtschaftliche Arbeitsmaschine gemäß dem Oberbegriff des Anspruches 1.

Eine bemannte landwirtschaftliche Arbeitsmaschine weist ein Visualisierungssystem auf, welches zur Visualisierung von durch an der Arbeitsmaschine angeordneten und/oder dieser zugeordneten Sensoren eines Sensorsystems bereitgestellten Informationen der Arbeitsmaschine, der Umgebung und einem von der Arbeitsmaschine auszuführenden Arbeitsprozess eingerichtet und ausgeführt ist. Weiterhin weist die Arbeitsmaschine eine Steuerungsvorrichtung auf, die zum Empfang und zur Auswertung von Daten, welche die Sensoren bereitstellen, ausgeführt und eingerichtet ist, um die Arbeitsmaschine anzusteuern.

Durch das Visualisierungssystem der Arbeitsmaschine sind einem Bediener, welcher sich auf einem Fahrersitz der Arbeitsmaschine befindet, Informationen der Arbeitsmaschine, der Umgebung und einem von der Arbeitsmaschine auszuführenden Arbeitsprozess visualisierbar.

Eine als selbstfahrender Mähdrescher ausgeführte, bemannte landwirtschaftliche Arbeitsmaschine mit einem Visualisierungssystem ist aus der DE 10 2022 105 594 A1 bekannt. Eine Steuereinrichtung der Arbeitsmaschine ist dazu eingerichtet, das Visualisierungssystem anzusteuern, um für einen vom Bediener ausgewählten Arbeitsprozess relevante Informationen zu visualisieren. Hierbei steuert die Steuereinrichtung das Visualisierungssystem kontextbasierend an, damit Informationen, die für den ausgewählten Arbeitsprozess nicht relevant sind, lediglich in grafisch untergeordneter Form zu visualisieren oder eine Visualisierung auszuschließen. Der Bediener der Arbeitsmaschine gibt hierbei vor, welche Informationen für ihn relevant sind. Dies vermittelt dem Bediener den Eindruck, die Arbeitsmaschine und die von dieser ausgeführten Arbeitsprozesse vollumfänglich kontrollieren zu können.

Ausgehend vom vorstehend genannten Stand der Technik liegt der Erfindung die Aufgabe zugrunde, eine landwirtschaftliche Arbeitsmaschine der eingangs genannten Artweiterzubilden, die einen zumindest teilautonomen Betrieb ermöglicht, wobei der Bediener im zumindest teilautonomen Betrieb vollumfänglich über Prozessabläufe und Stati der Arbeitsmaschine informiert wird.

Diese Aufgabe wird von einer landwirtschaftlichen Arbeitsmaschine mit den Merkmalen des Anspruches 1 gelöst. Vorteilhafte Weiterbildungen sind Gegenstand der abhängigen Ansprüche.

Gemäß dem Anspruch 1 wird eine landwirtschaftliche Arbeitsmaschine mit einem Visualisierungssystem, welches zur Visualisierung von durch an der Arbeitsmaschine angeordneten und/oder dieser zugeordneten Sensoren zumindest eines Sensorsystems bereitgestellten Informationen der Arbeitsmaschine, der Umgebung und einem von der Arbeitsmaschine auszuführenden Arbeitsprozess eingerichtet und ausgeführt ist, sowie einer Steuerungsvorrichtung, die zum Empfang und zur Auswertung von Daten und/oder Bilddaten, welche die Sensoren bereitstellen, ausgeführt und eingerichtet ist, um die Arbeitsmaschine und das Visualisierungssystem anzusteuern, vorgeschlagen. Erfindungsgemäß ist vorgesehen, dass das Visualisierungssystem dazu ausgeführt und programmiert ist, mittels zumindest einer Visualisierungseinheit einen laufenden Prozessschritt des von der teilautonom oder vollautonom betriebenen Arbeitsmaschine ausgeführten Arbeitsprozesses, einen oder mehrere geplante nachfolgende Prozessschritte und die an der Überwachung der Prozessschritte des Arbeitsprozesses beteiligten Sensoren zu visualisieren.

Dem liegt die Überlegung zugrunde, die Akzeptanz eines Bedieners, die landwirtschaftliche Arbeitsmaschine im teilautonomen oder vollautonomen Betrieb zu betreiben, zu erhöhen, indem der Bediener in den Ablauf eines laufenden Prozessschrittes des teil- oder vollautonom ausgeführten Arbeitsprozesses, die an der Überwachung des einen laufenden Prozessschrittes beteiligten Sensoren sowie den zumindest einen geplanten nachfolgenden Prozessschritt visuell eingebunden wird. Das Visualisierungssystem zeigt dem Bediener wesentliche Informationen darüber, was die Arbeitsmaschine im teilautonomen oder vollautonomen Betrieb sensorisch wahrnimmt und welche Sensoren daran beteiligt sind. Dies kann unabhängig davon erfolgen, ob sich der Bediener in einer Kabine der Arbeitsmaschine oder von der Arbeitsmaschine entfernt aufhält, um diese remote zu überwachen und anzusteuern.

Bevorzugt kann das Visualisierungssystem mit einer Speichereinheit der Steuerungsvorrichtung verbunden und/oder zur Kommunikation mit zumindest einer externen Datenquelle eingerichtet und verbunden sein, in welcher oder welchen Art und Position von relevanten Punkten (Points-of-Interest POI) auf einem zu bearbeitenden Territorium abrufbar hinterlegt sind, um diese durch die Ansteuerung des Visualisierungssystems zu visualisieren. Relevante Punkte auf einem zu bearbeitenden Territorium können den auszuführenden Arbeitsprozess beeinflussen, beispielsweise durch das Erfordernis einer Änderung der Fahrtroute, wenn der relevante Punkt beispielsweise ein Hindernis darstellt. Der Bediener kann somit in die Lage versetzt werden, auch in von der Arbeitsmaschine entfernter Position das Auftreten relevanter Punkte zu erkennen und die von der im teilautonomen oder vollautonomen Betrieb betriebenen Arbeitsmaschine als Reaktion hierauf einzuleitenden und durchzuführenden Maßnahmen nachzuvollziehen.

Dabei können die relevanten Punkte (POI) auf dem zu bearbeitenden Territorium bereits kartierte Objekte sein. Die Erfassung bereits kartierter Objekte kann bevorzugt während vorangehend ausgeführter landwirtschaftlicher Arbeitsprozesse und/oder im Vorfeld durch maschinenferne Sensorik, wie einer Drohne, erfolgt sein. Kartierte Objekte können vorhandene stationäre Hindernisse, wie Bäume, Strommasten, Gräben, Wasserlöcher oder dergleichen auf dem zu bearbeitenden Territorium sein. Als relevanten Punkte kartierte Objekte können zudem angrenzende Wege oder Straßen, benachbarte Felder oder dergleichen sein.

Insbesondere kann das Visualisierungssystem dazu eingerichtet sein, zumindest eine Teilmenge sensorisch erfasster Daten und/oder Bilddaten durch die zumindest eine Visualisierungseinheit zu visualisieren. Die Beschränkung der Visualisierung von sensorisch erfassten Daten und/oder Bilddaten auf eine Teilmenge dient dazu, den Bediener auf den laufenden Prozessschritt zu fokussieren.

Bevorzugt kann die Steuerungsvorrichtung dazu eingerichtet und programmiert sein, einen in der Speichereinheit hinterlegten Algorithmus auszuführen, welche die zu visualisierende Teilmenge sensorisch erfasster Daten und/oder Bilddaten bestimmt. Mittels des Algorithmus kann die Teilmenge sensorisch erfasster Daten und/oder Bilddaten selektiert werden, die dem Bediener durch das Visualisierungssystem angezeigt werden.

Weiter bevorzugt kann die Teilmenge die sensorisch erfassten Daten und/oder Bilddaten umfassen, die während des laufenden Prozessschrittes erfasst werden sowie Daten zumindest des unmittelbar nachfolgenden Prozessschrittes.

Hierbei kann die Steuerungsvorrichtung dazu eingerichtet und programmiert sein, mittels des Algorithmus die von den Sensoren bereitgestellten Daten und/oder Bilddaten zu bewerten, welche Teilmenge der während des laufenden Prozessschrittes erfassten Daten und/oder Bilddaten für den Bediener Relevanz haben, um diese Teilmenge dem Bediener mittels der zumindest einen Visualisierungseinheit anzuzeigen.

Insbesondere kann das Visualisierungssystem dazu eingerichtet sein, eine Fahrtroute für den laufenden Prozessschritt und/oder eine geplante Fahrtroute für den wenigstens einen nachfolgenden Prozessschritt durch die zumindest eine Visualisierungseinheit zu visualisieren.

Bevorzugt kann das Visualisierungssystem dazu eingerichtet sein, von Arbeitsaggregaten und/oder einem an die Arbeitsmaschine adaptierten Anbaugerät zur Durchführung des jeweiligen Prozessschrittes auszuführende Funktionsabläufe durch die zumindest eine Visualisierungseinheit zu visualisieren.

Weiter bevorzugt kann das Visualisierungssystem dazu eingerichtet sein, den Fortschritt des durchzuführenden Prozessschrittes zu visualisieren. Der Bediener kann somit über den Fortschritt fortlaufend unterreichtet gehalten werden.

Insbesondere kann die Arbeitsmaschine wahlweise in einem manuellen Modus, in einem teilautonomen Modus oder in einem vollautonomen Modus betreibbar sein. Ein Wechsel zwischen den drei Modi kann durch den Bediener der Arbeitsmaschine manuell auslösbar sein.

Dabei kann die Steuerungsvorrichtung dazu eingerichtet sein, durch Auswertung der Daten und/oder Bilddaten, welche die Sensoren bereitstellen, zu erkennen, ob ein Wechsel vom manuellen Modus in den teilautonomen Modus oder in den vollautonomen Modus durchführbar ist. Durch die Steuerungsvorrichtung können auf diese Weise Randbedingungen geprüft werden, ob der manuell ausgelöste Wechsel zwischen den drei Modi durchführbar ist. Beispielsweise ist ein Wechsel vom manuellen Modus in den teilautonomen Modus oder den vollautonomen Modus durch die Steuerungsvorrichtung auszuschließen, wenn durch die Auswertung der Daten bestimmt wird, dass sich die Arbeitsmaschine auf einer, insbesondere öffentlichen, Straße oder einem Weg befindet und/oder in einem Umfeld, in welchem sich Personen im Arbeitsbereich der Arbeitsmaschine aufhalten.

Des Weiteren kann die Steuerungsvorrichtung zur Ansteuerung der zumindest einen Visualisierungseinheit eingerichtet sein, welche zur optisch-akustischen Ausgabe eines Hinweises auf die Option des Wechselns vom manuellen Modus in den teilautonomen Modus oder in den vollautonomen Modus ausgeführt ist.

Bevorzugt kann die Steuerungsvorrichtung dazu eingerichtet sein, den Ausfall eines Sensors der an der Überwachung der Prozessschritte des Arbeitsprozesses beteiligten Sensoren zu bestimmen und in Abhängigkeit von der Notwendigkeit des Funktionierens des ausgefallenen Sensors an der Durchführung des laufenden Arbeitsprozesses eine Maßnahme abzuleiten. Insbesondere kann die Steuerungsvorrichtung dazu eingerichtet sein, bei Detektion des Ausfalls eines Sensors, der an der Überwachung der Durchführung des laufenden Arbeitsprozesses beteiligt ist, die Notwendigkeit des Funktionierens des ausgefallenen Sensors zu gewichten. Die Gewichtung kann den Einfluss wiedergeben, den der Ausfall des Sensors auf die Durchführung des laufenden Arbeitsprozesses hat.

Dabei kann die Steuerungsvorrichtung dazu eingerichtet sein, als Maßnahme den laufenden Arbeitsprozess automatisch zu unterbrechen und/oder einen Hinweis auf das Unterbrechen des Arbeitsprozesses auszugeben oder einen Hinweis auf eine erforderliche Reparatur durch die Ansteuerung der zumindest einen Visualisierungseinheit auszugeben.

Bevorzugt kann das Visualisierungssystem dazu ausgeführt und eingerichtet sein, den laufenden Prozessschritt aus einer Ich-Perspektive zu visualisieren. Hierdurch kann dem Bediener das Gefühl vermittelt werden, näher am Geschehen zu sein, was die Akzeptanz eines teilautonomen oder vollautonomen Betriebes der Arbeitsmaschine erhöhen kann. Dazu können in Echtzeit Daten und/oder Bilddaten von zumindest einem an der Arbeitsmaschine angeordneten, als Kamera ausgeführten Sensor zum Bediener übertragen und auf der zumindest einen Visualisierungseinheit oder mittels einer Videobrille dargestellt werden.

Die vorliegende Erfindung wird nachstehend anhand eines in den Zeichnungen dargestellten Ausführungsbeispieles näher erläutert.

Es zeigen:
- Fig. 1: schematisch und exemplarisch eine Ansicht eines Visualisierungssystems einer teilautonom oder vollautonom betreibbaren Arbeitsmaschine;
- Fig. 2: schematisch und exemplarisch eine Darstellung eines Frontbereichs einer Kabine der Arbeitsmaschine gemäß Fig. 1 mit Sensoren eines Sensorsystems zur Detektion der Umgebung der landwirtschaftlichen Arbeitsmaschine und eines von der Arbeitsmaschine auszuführenden Arbeitsprozesses;
- Fig. 3: schematisch und exemplarisch eine Darstellung einer durch zumindest eine Visualisierungseinheit des Visualisierungssystems angezeigten kritischen Betriebssituation;
- Fig. 4: schematisch und exemplarisch eine Darstellung einer durch die zumindest eine Visualisierungseinheit angezeigten unkritischen Betriebssituation; und
- Fig. 5: schematisch und exemplarisch eine Darstellung eines durch die zumindest eine Visualisierungseinheit angezeigten nachfolgenden Prozessschrittes.

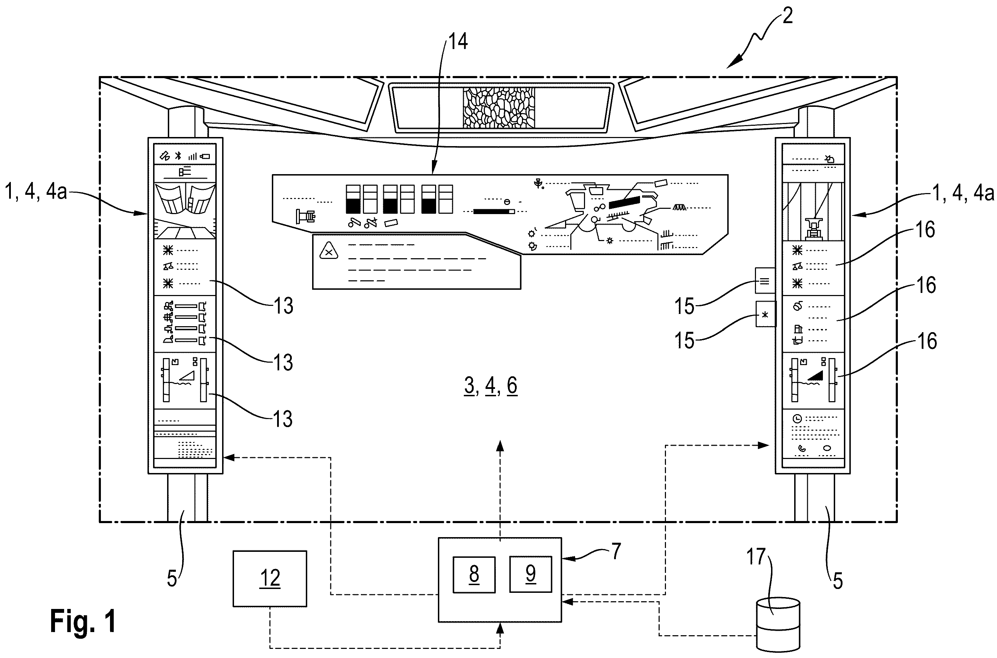

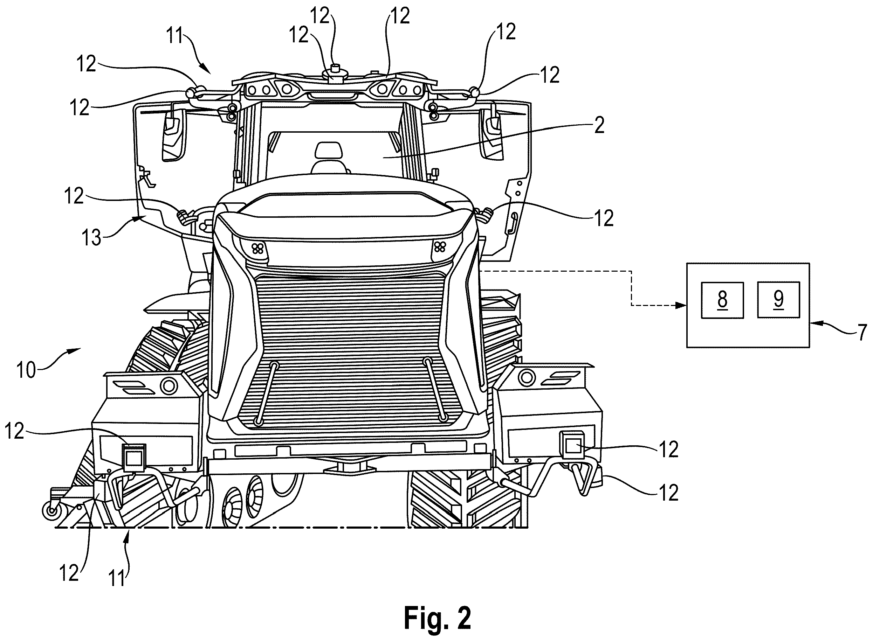

In Fig. 1 ist schematisch und exemplarisch eine Ansicht eines Visualisierungssystems 1 einer sowohl teilautonom als auch vollautonom betreibbaren Arbeitsmaschine 10 dargestellt. Die teilautonom oder vollautonom betreibbare Arbeitsmaschine 10 kann bevorzugt als selbstfahrende Erntemaschine oder als Traktor, wie in Fig. 2 angedeutet, ausgeführt sein. Die Arbeitsmaschine 10 weist eine Kabine 2 auf, die einen baulich begrenzten Innenraum umfasst. Der Innenraum ist zu einer Front der Arbeitsmaschine 10 hin von einer Frontscheibe 3 sowie zu den Seiten durch Seitenscheiben begrenzt. In dem Innenraum der Kabine 2 ist ein Fahrersitz angeordnet, auf dem ein Bediener der Arbeitsmaschine 10 Platz nehmen kann. Die Arbeitsmaschine 10 ist in einem in einem manuellen Modus BM, in einem Teilautomatisierungsmodus TM teilautonom oder in einem Vollautomatisierungsmodus VM vollautonom betreibbar.

Das Visualisierungssystem 1 umfasst zumindest eine Visualisierungseinheit 4. In dem gezeigten Ausführungsbeispiel umfasst das Visualisierungssystem 1 zwei Displays 4a als Visualisierungseinheiten 4, die hier in Form von LC-Displays ausgebildet sind, sowie mehrere Scheibenanzeigen 6 als Visualisierungseinheiten 4. Scheibenanzeigen 6 sind grundsätzlich von Head-up Displays bekannt, wobei vorzugsweise mittels eines Projektors ein Bild auf die jeweilige Scheibe projiziert wird oder in die Scheibe eine Displayfolie einlaminiert ist. Im dargestellten Ausführungsbeispiel sind die Scheibenanzeigen 6 von Displayfolien gebildet, von zumindest eine in die Frontscheibe 3 einlaminiert ist. Weitere von Displayfolien gebildete Scheibenanzeigen 6 können in die Seitenscheiben einlaminiert sein. Mittels der Scheibenanzeigen 6 sind Informationen unmittelbar im Bereich der jeweiligen Scheibe visualisierbar. Die beiden Displays 4a sind an A-Säulen 5 der Kabine 2 angeordnet.

Die Arbeitsmaschine 10 umfasst weiterhin eine Steuerungsvorrichtung 7, die in dem gezeigten Beispiel von einer Datenverarbeitungseinrichtung gebildet ist. Diese umfasst mindestens eine Recheneinheit 8, die zur Ausführung von in einer Speichereinheit 9 hinterlegter oder hinterlegbarer Software geeignet ist. Das Visualisierungssystem 1 ist zur Datenübertragung mit der Steuerungsvorrichtung 7 verbunden, wobei die Steuerungsvorrichtung 7 dazu eingerichtet ist, das Visualisierungssystem 1 anzusteuern. Auf diese Weise können Informationen mittels des Visualisierungssystems 1 dem Bediener der Arbeitsmaschine 10 visualisiert werden.

Die Arbeitsmaschine 10 umfasst eine Vielzahl von an dieser angeordneten und/oder zugeordneten Sensoren 12 eines Sensorsystems 11, die in Fig. 2 näher dargestellt sind. Die Sensoren 12 des Sensorsystems 11 sind jeweils mit der Steuerungsvorrichtung 7 verbunden, sodass Daten und/oder Bilddaten als Informationen, die mittels der Sensoren 12 erfasst werden, an die Steuerungsvorrichtung 7 übertragbar und durch die Recheneinheit verarbeitbar und auswertbar sind. Die Verarbeitung der von den Sensoren 12 bereitgestellten Daten und/oder Bilddaten der Arbeitsmaschine 10, der Umgebung und eines von der Arbeitsmaschine 10 auszuführenden Arbeitsprozesses durch die Steuerungsvorrichtung 7 erfolgt, um die Arbeitsmaschine 10 entsprechend ihrem Betriebsmodus anzusteuern.

Die Verarbeitung erfolgt zudem in der Weise, dass die Steuerungsvorrichtung 7 das Visualisierungssystem 1 ansteuert, um dem Bediener Informationen zu visualisieren. Hierbei werden mittels der Displays 4a, die an den A-Säulen 5 angeordnet sind, sowie mittels der Scheibenanzeigen 5, die in die Frontscheibe 3 einlaminiert ist, verschiedene grafische Elemente 13, 14, 15, 16 visualisiert. Diese grafischen Elemente 13, 14, 15, 16 bilden die Informationen betreffend die Arbeitsmaschine 10, die Umgebung sowie den auszuführenden Arbeitsprozess der Arbeitsmaschine 10 ab, die von dem Bediener optisch wahrgenommen werden können. Der Bediener kann auf diese Weise Probleme erkennen, Veränderungen vornehmen und Entscheidungen treffen.

Fig. 2 zeigt eine schematische und exemplarische Darstellung eines Frontbereichs der Kabine 2 der Arbeitsmaschine 10 gemäß Fig. 1 mit Sensoren 12 des zumindest einen Sensorsystems 11 zur Detektion der Umgebung der landwirtschaftlichen Arbeitsmaschine 10 und des von der Arbeitsmaschine 10 auszuführenden Arbeitsprozesses.

Die landwirtschaftliche Arbeitsmaschine 10 ist, wie eingangs angemerkt, im manuellen Modus MM, also einem Betriebsmodus, in welchem während des Betriebes der landwirtschaftlichen Arbeitsmaschine 10 die permanente Überwachung und für die Durchführung spezifischer Aufgaben zumindest zeitweise ein Eingriff seitens des Bedieners in die Steuerung der landwirtschaftlichen Arbeitsmaschine 10 erforderlich ist, und des Weiteren im teilautonomen Modus TM sowie im vollautonomen Modus VM betreibbar.

Der teilautonome Modus TM der landwirtschaftlichen Arbeitsmaschine 10 ist im Rahmen der Erfindung als ein Betriebsmodus definiert, in welchem die Durchführung spezifischer Aufgaben temporär und/oder situationsabhängig an die Steuerungsvorrichtung 7 delegiert werden kann, wodurch der Bediener entlastet wird. Der Bediener kann jedoch unmittelbar in den teilautonom durchführbaren Betriebsablauf eingreifen, um diesen zu übersteuern.

Der vollautonome Modus VM der landwirtschaftlichen Arbeitsmaschine 10 ist im Rahmen der Erfindung als ein Betriebsmodus definiert, welcher während des Betriebes der landwirtschaftlichen Arbeitsmaschine 10 keinen Eingriff seitens des Bedieners in die Steuerung der landwirtschaftlichen Arbeitsmaschine 10 erfordert, weder für den Antrieb und die Spurführung der landwirtschaftlichen Arbeitsmaschine 1 noch für die Ansteuerung von - in den Figuren nicht dargestellten - Arbeitsaggregaten oder Anbaugeräten zur Ausführung von Arbeitsprozessen.

Der vollautonome Modus VM der landwirtschaftlichen Arbeitsmaschine 10 entspricht demnach einem Betrieb einer unbemannten autonomen landwirtschaftlichen Arbeitsmaschine 10, der unabhängig von der Anwesenheit des Bedieners in der Kabine 2 ist.

Die landwirtschaftliche Arbeitsmaschine 10 umfasst zumindest ein Sensorsystem 11 zur Detektion von Objekten in der Umgebung der landwirtschaftlichen Arbeitsmaschine 10. Das zumindest eine Sensorsystem 11 umfasst dabei zumindest einen Sensor 12. Das zumindest eine Sensorsystem 11 mit zumindest einem Sensor 12 basiert weiterhin auf einer spezifischen Sensortechnologie. Jedes Sensorsystem 11 ist mit der Steuerungsvorrichtung 7 zur Übertragung von Sensordaten verbunden. Die Steuerungsvorrichtung 7 ist somit dazu vorgesehen und eingerichtet, basierend auf von dem zumindest einen Sensorsystem 12 bereitgestellten Daten und/oder Bilddaten die landwirtschaftliche Arbeitsmaschine 1 im jeweiligen Betriebsmodus zu überwachen und, zumindest im teilautonomen Modus TM oder vollautonomen Modus VM, anzusteuern. Damit der Betrieb der landwirtschaftlichen Arbeitsmaschine 10 im jeweiligen Betriebsmodus in allen potenziell auftretenden Betriebssituationen und bei allen potenziell auftretenden Umgebungsverhältnissen/-einflüssen erfolgen kann, sind bevorzugt zwei oder mehr Sensorsysteme 12 vorgesehen, die auf verschiedenen Sensortechnologien basieren.

Verschiedene Sensortechnologien haben verschiedene Stärken und Schwächen, sodass bei einer Nutzung lediglich eines Sensorsystems 12, welches auf nur einer Sensortechnologie basiert, unter Umständen nicht in allen Betriebssituationen und/oder bei allen Umgebungsverhältnissen/-einflüssen eine Detektion von Objekten in der Umgebung der landwirtschaftlichen Arbeitsmaschine 10 gewährleistet ist und somit ein Betrieb der landwirtschaftlichen Arbeitsmaschine 1 im teilautonomen Modus TM oder vollautonomen Modus VM zuverlässig sichergestellt werden kann. Durch die Verwendung zumindest zweier Sensorsysteme 12, die auf verschiedenen Sensortechnologien basieren, kann diesem Umstand Rechnung getragen werden. Eine der Sensortechnologien, auf denen das zumindest eine Sensorsystem 11 basiert, ist vorzugsweise eine Radar-Technologie, eine Lidar-Technologie oder eine Kamera-Technologie.

Für den Betrieb der Arbeitsmaschine 10 im teilautonomen Modus TM oder im vollautonomen Modus VM anstelle des manuellen Modus MM durch den Bediener ist es vorteilhaft, wenn der Bediener vollumfänglich über Abläufe während der Ausführung des Arbeitsprozesses und über Stati aller zum teilautonomen Betrieb beitragenden Komponenten informiert ist. Hierdurch kann die Akzeptanz des Bedieners für das Betreiben im teilautonomen Modus TM oder im vollautonomen Modus VM erhöht werden.

Erfindungsgemäß ist das Visualisierungssystem 1 dazu ausgeführt und programmiert, mittels der zumindest einer Visualisierungseinheit 4 einen laufenden Prozessschritt des von der im teilautonomen Modus TM oder im vollautonomen Modus VM betriebenen Arbeitsmaschine 10 ausgeführten Arbeitsprozesses, einen oder mehrere geplante nachfolgende Prozessschritte und die an der Überwachung der Prozessschritte des Arbeitsprozesses beteiligten Sensoren 12 zu visualisieren.

Das Visualisierungssystem 1 ist zur Kommunikation mit der Steuerungsvorrichtung 7 und/oder zumindest einer externen Datenquelle 17 eingerichtet und verbunden, in welcher oder welchen relevante Punkten (Points-of-Interest POI) auf einem durch die Arbeitsmaschine 10 zu bearbeitenden Territorium 18 abrufbar hinterlegt sind, um diese zu visualisieren. Dabei können die relevanten Punkte (POI) ihrer Art und Position auf dem zu bearbeitenden Territorium 18 nach in der zumindest einen externen Datenquelle 17 hinterlegt sein. Die Erfassung der relevanten Punkte (POI) kann in einer Datenbank und/oder einer topografischen Karte erfolgen.

Weiter kann das Visualisierungssystem 1 dazu eingerichtet sein, zumindest eine Teilmenge sensorisch erfasster Daten und/oder Bilddaten durch die zumindest eine Visualisierungseinheit zu visualisieren. Dazu kann die Steuerungsvorrichtung 7 dazu eingerichtet und programmiert sein, einen in der Speichereinheit 9 hinterlegten Algorithmus auszuführen, welcher die zu visualisierende Teilmenge sensorisch erfasster Daten und/oder Bilddaten bestimmt.

Die zu visualisierende Teilmenge umfasst bevorzugt nur die sensorisch erfassten Daten und/oder Bilddaten, die während des laufenden Prozessschritt erfasst werden, sowie Daten des unmittelbar nachfolgenden Prozessschrittes. Die Steuerungsvorrichtung 7 ist weiterhin dazu eingerichtet und programmiert, mittels des Algorithmus die von den Sensoren 12 bereitgestellten Daten und/oder Bilddaten zu bewerten, welche Teilmenge der während des laufenden Prozessschrittes erfassten Daten und/oder Bilddaten für den Bediener Relevanz haben, um diese Teilmenge dem Bediener mittels der zumindest einen Visualisierungseinheit 4 anzuzeigen.

Das Visualisierungssystem 1 ist dazu eingerichtet, eine Fahrtroute für den laufenden Prozessschritt und/oder eine geplante Fahrtroute für den wenigstens einen nachfolgenden Prozessschritt durch die zumindest eine Visualisierungseinheit 4 zu visualisieren. Weiterhin kann das Visualisierungssystem 1 dazu eingerichtet sein, von Arbeitsaggregaten und/oder einem an die Arbeitsmaschine 10 adaptierten Anbaugerät zur Durchführung des jeweiligen Prozessschrittes auszuführende Funktionsabläufe durch die zumindest eine Visualisierungseinheit 4 zu visualisieren. Des Weiteren kann das Visualisierungssystem 1 dazu eingerichtet sein, den Fortschritt des durchzuführenden Prozessschrittes zu visualisieren.

Die Steuerungsvorrichtung 7 ist dazu eingerichtet, den Ausfall eines Sensors 12 der an der Überwachung der Prozessschritte des Arbeitsprozesses beteiligten Sensoren 12 zu bestimmen und in Abhängigkeit von der Notwendigkeit des Funktionierens des ausgefallenen Sensors 12 an der Durchführung des laufenden Arbeitsprozesses eine Maßnahme abzuleiten. Hierzu ist die Steuerungsvorrichtung 7 dazu eingerichtet, als Maßnahme den laufenden Arbeitsprozess automatisch zu unterbrechen und/oder einen Hinweis auf das Unterbrechen des Arbeitsprozesses mittels der zumindest einen Visualisierungseinheit 4 auszugeben. Ist das Funktionieren des als defekt bestimmten Sensors 12 für die Durchführung des laufenden Arbeitsprozesses nicht erforderlich, kann ein Hinweis auf eine erforderliche Reparatur mittels der zumindest einen Visualisierungseinheit 4 ausgeben werden. So kann beispielsweise erst nach der Durchführung des laufenden Arbeitsprozesses selbsttätig ein Servicepunkt durch die im teilautonomen Modus TM oder im vollautonomen Modus VM betriebene Arbeitsmaschine 1 angefahren werden, um die erforderliche Reparatur vornehmen zu können.

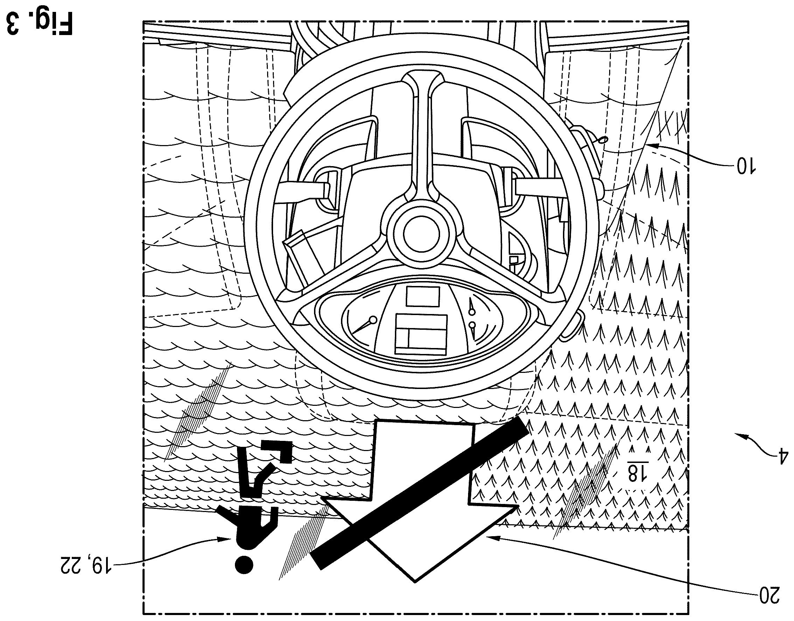

In Fig. 3 ist schematisch und exemplarisch eine Darstellung einer durch zumindest eine Visualisierungseinheit 4 des Visualisierungssystems 1 angezeigten kritischen Betriebssituation gezeigt.

Bevorzugt kann das Visualisierungssystem 1 dazu ausgeführt und eingerichtet sein, den laufenden Prozessschritt aus einer Ich-Perspektive zu visualisieren. Hierdurch kann dem Bediener das Gefühl vermittelt werden, näher am Geschehen zu sein, wodurch die Akzeptanz eines teilautonomen oder vollautonomen Betriebes der Arbeitsmaschine 10 erhöht werden kann. Dazu können in Echtzeit Daten und/oder Bilddaten von zumindest einem an der Arbeitsmaschine 10 angeordneten, als Kamera ausgeführten Sensor 12 zum Bediener übertragen und von der zumindest einen Visualisierungseinheit 4 oder mittels einer Videobrille dargestellt werden.

In der dargestellten kritischen Betriebssituation wird durch die Sensoren 12 des zumindest einen Sensorsystems 11 eine Person als Hindernis 19 auf dem zu bearbeitenden Territorium 18 erkannt und durch die zumindest eine Visualisierungseinheit 4 visualisiert, vorzugsweise aus der Ich-Perspektive. Die Vorwärtsfahrt wird wegen des detektierten Hindernisses 19 unterbrochen, was beispielsweise durch ein Piktogramm 20, hier ein die Vorwärtsfahrt symbolisierender, durchgestrichener Pfeil. Das Hindernis 19 selbst kann durch ein weiteres Piktogramm 22 veranschaulicht oder in Echtzeit tatsächlich angezeigt werden.

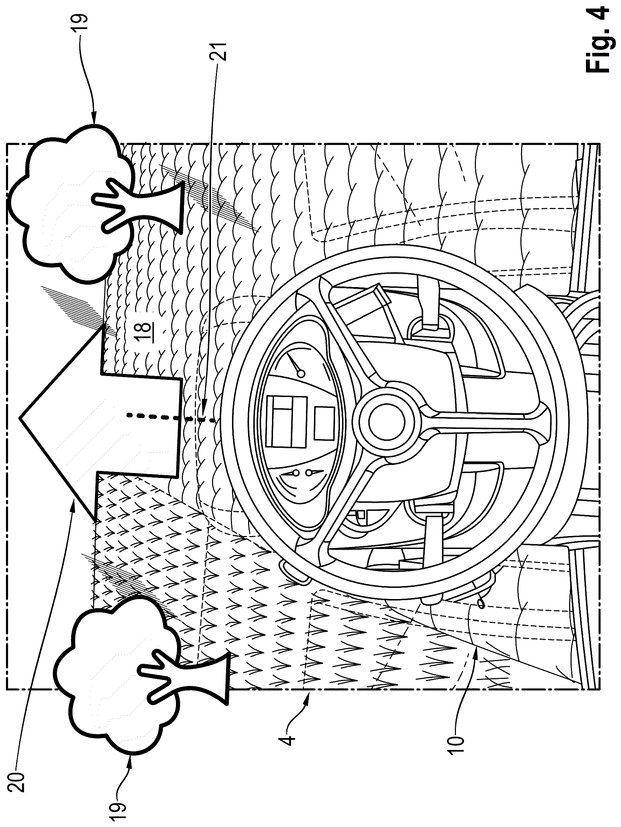

Fig. 4 zeigt schematisch und exemplarisch eine Darstellung einer durch die zumindest eine Visualisierungseinheit 4 dem Bediener angezeigten unkritischen Betriebssituation. Durch die Sensoren 12 des zumindest einen Sensorsystems 11 sind Hindernisse 19, hier beispielhaft in Form von Bäumen, detektiert worden, welche jedoch aufgrund ihrer, beispielsweise aus der Kartierung des Territoriums 18, bekannten Positionen die Durchführung des Arbeitsprozesses auf der aktuell abzufahrenden Fahrspur 21 nicht beeinflussen.

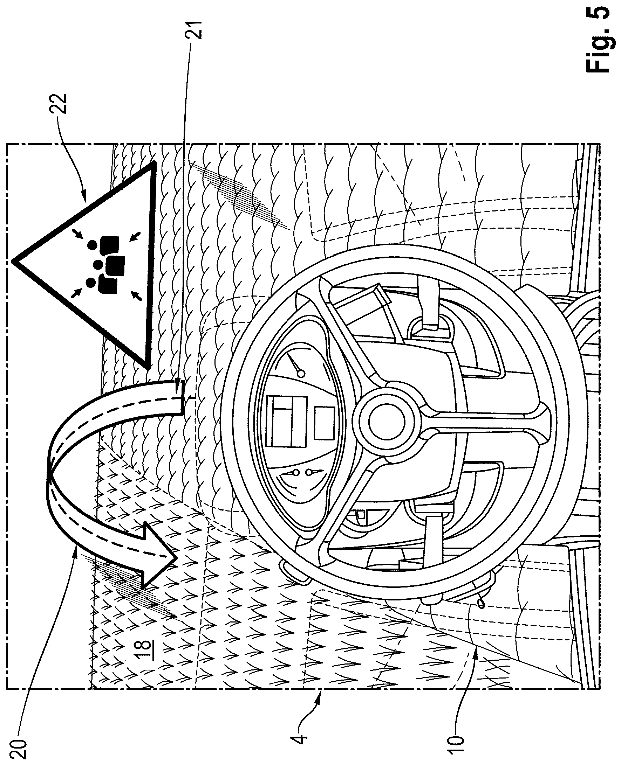

Fig. 5 zeigt schematisch und exemplarisch eine Darstellung eines durch die zumindest eine Visualisierungseinheit 4 angezeigten nachfolgenden Prozessschrittes. Der nachfolgende Prozessschritt ist hier beispielsweise das selbsttätige Anfahren eines Servicepunktes durch die im teilautonomen Modus TM oder im vollautonomen Modus VM betriebene Arbeitsmaschine 10. Dabei wird durch das eine Piktogramm 20 eine hierfür erforderliche Fahrrichtungsänderung visualisiert und durch das weitere Piktogramm 22 der nachfolgende Prozessschritt, das selbsttätige Anfahren eines Servicepunktes.

### Bezugszeichenliste

- 1: Visualisierungssystem
- 2: Kabine
- 3: Frontscheibe
- 4: Visualisierungseinheit
- 4a: Display
- 5: A-Säule
- 6: Scheibenanzeige
- 7: Steuerungsvorrichtung
- 8: Recheneinheit
- 9: Speichereinheit
- 10: Arbeitsmaschine
- 11: Sensorsystem
- 12: Sensor
- 13: Grafisches Element
- 14: Grafisches Element
- 15: Grafisches Element
- 16: Grafisches Element
- 17: Externe Datenquelle
- 18:
- 19: Hindernis
- 20: Piktogramm
- 21: Fahrspur
- 22: Piktogramm

- MM: Manueller Modus
- TM: Teilautonomer Modus
- VM: Vollautonomer Modus

## Patentansprüche

1. Landwirtschaftliche Arbeitsmaschine (10) mit einem Visualisierungssystem (1), welches zur Visualisierung von durch an der Arbeitsmaschine (10) angeordneten und/oder dieser zugeordneten Sensoren (12) zumindest eines Sensorsystems (11) bereitgestellten Informationen der Arbeitsmaschine (10), der Umgebung und einem von der Arbeitsmaschine (10) auszuführenden Arbeitsprozess eingerichtet und ausgeführt ist, sowie einer Steuerungsvorrichtung (7), die zum Empfang und zur Auswertung von Daten und/oder Bilddaten, welche die Sensoren (12) bereitstellen, ausgeführt und eingerichtet ist, um die Arbeitsmaschine (10) und das Visualisierungssystem (1) anzusteuern, **dadurch gekennzeichnet, dass** das Visualisierungssystem (1) dazu ausgeführt ist, mittels zumindest einer Visualisierungseinheit (4) einen laufenden Prozessschritt des von der in einem teilautonomen Modus (TM) oder vollautonomen Modus (VM) betriebenen Arbeitsmaschine (10) ausgeführten Arbeitsprozesses, einen oder mehrere geplante nachfolgende Prozessschritte und die an der Überwachung der Prozessschritte des Arbeitsprozesses beteiligten Sensoren (12) zu visualisieren.

2. Landwirtschaftliche Arbeitsmaschine (10) nach Anspruch 1, **dadurch gekennzeichnet, dass** die Steuerungsvorrichtung (7) eine Speichereinheit (9) umfasst und/oder zur Kommunikation mit zumindest einer externen Datenquelle (17) eingerichtet und verbunden ist, in welcher oder welchen Art und Position von relevanten Punkten (Points-of-Interest POI) auf einem zu bearbeitenden Territorium (18) abrufbar hinterlegt sind, um diese durch die Ansteuerung des Visualisierungssystems (1) zu visualisieren.

3. Landwirtschaftliche Arbeitsmaschine (10) nach Anspruch 2, **dadurch gekennzeichnet, dass** die relevanten Punkte (POI) auf dem zu bearbeitenden Territorium (18) bereits kartierte Objekte sind.

4. Landwirtschaftliche Arbeitsmaschine (10) nach einem der Ansprüche 1 bis 3, **dadurch gekennzeichnet, dass** das Visualisierungssystem (1) dazu eingerichtet ist, zumindest eine Teilmenge sensorisch erfasster Daten und/oder Bilddaten durch die zumindest eine Visualisierungseinheit (4) zu visualisieren.

5. Landwirtschaftliche Arbeitsmaschine (10) nach Anspruch 4, **dadurch gekennzeichnet, dass** die Steuerungsvorrichtung (7) dazu eingerichtet und programmiert ist, einen in der Speichereinheit (9) hinterlegten Algorithmus auszuführen, welche die zu visualisierende Teilmenge sensorisch erfasster Daten und/oder Bilddaten bestimmt.

6. Landwirtschaftliche Arbeitsmaschine (10) nach Anspruch 4 oder 5, **dadurch gekennzeichnet, dass** die Teilmenge die sensorisch erfassten Daten und/oder Bilddaten umfasst, die während des laufenden Prozessschritt erfasst werden sowie Daten des unmittelbar nachfolgenden Prozessschrittes.

7. Landwirtschaftliche Arbeitsmaschine (10) nach Anspruch 4 bis 6, **dadurch gekennzeichnet, dass** die Steuerungsvorrichtung (7) dazu eingerichtet und programmiert ist, mittels des Algorithmus die von den Sensoren (12) bereitgestellten Daten und/oder Bilddaten zu bewerten, welche Teilmenge der während des laufenden Prozessschrittes erfassten Daten und/oder Bilddaten für den Bediener Relevanz haben, um diese Teilmenge dem Bediener mittels der zumindest einen Visualisierungseinheit (4) anzuzeigen.

8. Landwirtschaftliche Arbeitsmaschine (10) nach einem der vorangehenden Ansprüche, **dadurch gekennzeichnet, dass** das Visualisierungssystem (1) dazu eingerichtet ist, eine Fahrtroute für den laufenden Prozessschritt und/oder eine geplante Fahrtroute für den wenigstens einen nachfolgenden Prozessschritt durch die zumindest eine Visualisierungseinheit (4) zu visualisieren.

9. Landwirtschaftliche Arbeitsmaschine (10) nach einem der vorangehenden Ansprüche, **dadurch gekennzeichnet, dass** das Visualisierungssystem (1) dazu eingerichtet ist, von Arbeitsaggregaten und/oder einem an die Arbeitsmaschine (10) adaptierten Anbaugerät zur Durchführung des jeweiligen Prozessschrittes auszuführende Funktionsabläufe durch die zumindest eine Visualisierungseinheit (4) zu visualisieren.

10. Landwirtschaftliche Arbeitsmaschine (10) nach einem der vorangehenden Ansprüche, **dadurch gekennzeichnet, dass** das Visualisierungssystem (1) dazu eingerichtet ist, den Fortschritt des durchzuführenden Prozessschrittes zu visualisieren.

11. Landwirtschaftliche Arbeitsmaschine (10) nach einem der vorangehenden Ansprüche, **dadurch gekennzeichnet, dass** die Arbeitsmaschine (10) wahlweise in einem manuellen Modus (MM), einem teilautonomen Modus (TM) oder einem vollautonomen Modus (VM) betreibbar ist.

12. Landwirtschaftliche Arbeitsmaschine (10) nach Anspruch 11, **dadurch gekennzeichnet, dass** die Steuerungsvorrichtung dazu eingerichtet ist, durch Auswertung der Daten und/oder Bilddaten, welche die Sensoren (12) bereitstellen, zu erkennen, ob ein Wechsel vom manuellen Modus (MM) in den teilautonomen Modus (TM) oder in den vollautonomen Modus (VM) durchführbar ist.

13. Landwirtschaftliche Arbeitsmaschine (10) nach Anspruch 12, **dadurch gekennzeichnet, dass** die Steuerungsvorrichtung (7) zur Ansteuerung der zumindest einen Visualisierungseinheit (4) eingerichtet ist, welche zur optisch-akustischen Ausgabe eines Hinweises auf die Option des Wechselns vom manuellen Modus (MM) in den teilautonomen Modus (TM) oder in den vollautonomen Modus (VM) ausgeführt ist.

14. Landwirtschaftliche Arbeitsmaschine (10) nach einem der vorangehenden Ansprüche, **dadurch gekennzeichnet, dass** die Steuerungsvorrichtung (7) dazu eingerichtet ist, den Ausfall eines Sensors (12) der an der Überwachung der Prozessschritte des Arbeitsprozesses beteiligten Sensoren (12) zu bestimmen und in Abhängigkeit von der Notwendigkeit des Funktionierens des ausgefallenen Sensors (12) an der Durchführung des laufenden Arbeitsprozesses eine Maßnahme abzuleiten.

15. Landwirtschaftliche Arbeitsmaschine (10) nach Anspruch 14, **dadurch gekennzeichnet, dass** die Steuerungsvorrichtung (7) dazu eingerichtet ist, als Maßnahme den laufenden Arbeitsprozess automatisch zu unterbrechen und/oder einen Hinweis auf das Unterbrechen des Arbeitsprozesses auszugeben oder einen Hinweis auf eine erforderliche Reparatur durch die Ansteuerung der zumindest einen Visualisierungseinheit (4) auszugeben.
